# FASCICULE DE BREVET EUROPEEN

(11) **EP 2 124 136 B1**
(45) Date de publication et mention de la délivrance du brevet: **22.08.2012**
(21) Numéro de dépôt: 08447027.7
(22) Date de dépôt: 23.05.2008
(51) Int. Cl.: G06F 3/033, A01K 15/02

(54) **Dispositif mains libres pour télécommande**
Freihändige Vorrichtung für Fernsteuerung
Hands-free device for remote control

(43) Date de publication de la demande: 25.11.2009
(73) Titulaire: Martin, Charles, 4450 Lantin (BE)
(72) Inventeur: Martin, Charles, 4450 Lantin (BE)
(74) Mandataire: pronovem

(56) Documents cités:
- WO-A-96/39679
- US-A1- 2006 164 383
- US-A1- 2007 080 934

## Description

### Objet de l'invention

La présente invention se rapporte à un dispositif du type kit « mains libres » permettant d'actionner une télécommande sans fil éventuellement bidirectionnelle, sans tenir cette télécommande en main.

Le domaine d'application de l'invention est celui des appareils électroniques commandés à distance et en particulier, celui du dressage d'animaux par des moyens électroniques.

### Etat de la technique

Dans le cadre du dressage d'animaux, on connaît des systèmes de contrôle pour le dressage ou le confinement, utilisant d'une part une télécommande sans fil et d'autre part un récepteur sous forme d'un collier porté par l'animal, en particulier le chien. La finalité de ces systèmes est de transmettre à distance des stimuli visant à inculquer un comportement donné à l'animal (stimulation électrique, sonore, olfactive, etc.). Voir par exemple : US-A-6,019,066, JP-A-2000/262174, US-A-2007/191913, US 6,549,133 B2, US-A-2007/204803, US-A-5,815,077, etc.

Dans ce contexte, il est souvent intéressant dé pouvoir commander son chien tout en accomplissant par ailleurs des actions pour lesquelles on a besoin de ses deux mains.

De plus, le fait de tenir en main une télécommande pendant un certain temps, par exemple lors d'une promenade, peut s'avérer inconfortable à la longue même si les télécommandes actuelles sont petites et légères.

Le document US 2007/0080934 A1 divulgue une méthode et un système de transmission de données vers et à partir d'un dispositif hôte porté à la main. Un dispositif accessoire pour l'interfaçage avec un dispositif hôte comprend un canal de communication conçu pour établir une liaison de données bidirectionnelle entre le dispositif accessoire et le dispositif hôte. Le dispositif accessoire comprend également une unité de mémorisation en communication avec le canal de communication. L'unité de mémorisation est conçue pour mémoriser différentes données. En outre, au moins une première donnée est transmise sélectivement des données mémorisées du dispositif accessoire vers le dispositif hôte au travers de la liaison de données bidirectionnelle établie.

Le document US 2006/0164383 A1 divulgue un contrôleur porté à la main consistant en un boîtier ayant une ouverture centrale dimensionnée pour permettre le port du contrôleur comme anneau à l'index de la main. Un levier de joystick est dirigé vers l'extérieur du boîtier et est positionné pour être manipulé par le pouce de l'utilisateur. Le joystick actionne un ou plusieurs dispositifs de contrôle, tels que des interrupteurs ou des potentiomètres qui produisent des signaux de contrôle. Un dispositif de communication sans fil, tel qu'un module Bluetooth, monté dans le boîtier transmet des signaux de commande à un dispositif d'utilisation à distance qui sont indicatifs du mouvement ou de la position du levier de joystick.

### Buts de l'invention

La présente invention vise à fournir une solution permettant de s'affranchir des inconvénients de l'état de la technique.

En particulier, l'invention vise à fournir un dispositif permettant d'actionner une télécommande sans fil, sans tenir cette télécommande en main.

L'invention a aussi pour but de fournir un kit mains libres pour le dressage d'animaux à distance.

L'invention a encore pour but de fournir un dispositif de dressage télécommandé permettant de gérer chaque animal individuellement et spécifiquement, en évitant les interférences entre différents appareils.

### Principaux éléments caractéristiques de l'invention

La présente invention concerne un système électronique télécommandé, comprenant :
- un dispositif « mains libres » de commande sous forme d'un anneau, muni d'un moyen d'attache au doigt, d'au moins un interrupteur ainsi que de moyens de télécommunication sans fil avec une télécommande ;
- une télécommande sans fil munie de moyens de télécommunication sans fil d'une part avec ledit anneau apte à être attaché au doigt et d'autre part avec un dispositif récepteur électronique ;
- un dispositif récepteur électronique muni de moyens de télécommunication sans fil avec ladite télécommande.

Selon l'invention, le dispositif récepteur électronique fait partie d'un collier de dressage d'animal.

Des modes d'exécution préférés de l'invention reprennent en outre en combinaison une ou plusieurs des caractéristiques ci-après :
- le moyen d'attache au doigt comprend un tissu ou une bande élastique, une bande Velcro^{®} ou un système constitué de deux pinces ergonomiques ;
- ledit anneau comprend une paire d'interrupteurs correspondant à deux commandes distinctes programmables par la télécommande ;
- une paire d'interrupteurs correspondants figure également sur la télécommande ;
- les moyens de télécommunication sans fil sont des moyens de télécommunication par ondes radio, d'une portée d'au moins 10 mètres, de préférence selon la technologie ZigBee ou Bluetooth^{®}, infrarouges ou par ultrasons ; ces moyens de télécommunication sans fil peuvent être unidirectionnels ou bidirectionnels ;
- la télécommande peut commander plusieurs dispositifs récepteurs et peut être mise en communication avec plusieurs anneaux ;
- le système comporte des moyens pour synchroniser chaque anneau de manière biunivoque avec son dispositif récepteur correspondant ;
- un code d'identification unique est associé à chaque anneau et stocké dans une mémoire de celui-ci ;
- les commandes associées aux deux interrupteurs de la paire servent à commander deux dispositifs récepteurs différents

### Brève description des figures

La figure 1 représente schématiquement le dispositif mains libres de dressage d'un animal à distance selon la présente invention, comprenant un anneau, une télécommande et un collier de dressage.

La figure 2 est le schéma de principe de l'anneau précité.

La figure 3 est le schéma de principe de la télécommande précitée.

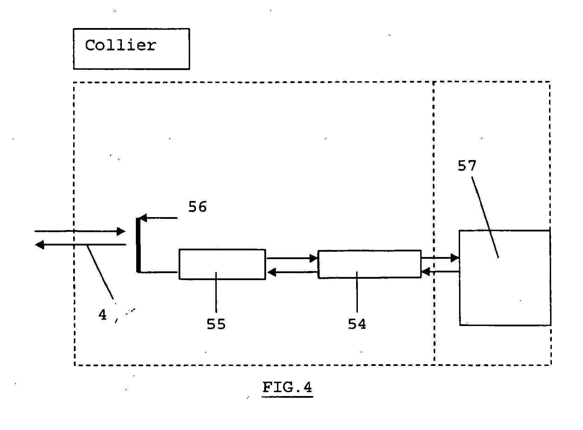

La figure 4 est le schéma de principe du collier précité.

### Description d'une forme d'exécution préférée de l'invention

La solution au problème technique posé proposée dans le cadre de la présente invention consiste en l'utilisation d'un anneau comportant par exemple deux interrupteurs ou « switchs » qui communique avec la télécommande proprement dite. Cet anneau est adapté pour être fixé sur un doigt de la main, l'index par exemple, le pouce étant alors utilisé pour actionner les switchs. Tout type d'interrupteur connu de l'homme de métier entre dans le champ d'application de l'invention (par ex. interrupteur à levier, à bascule, à glissière, à bouton poussoir, rotatif, tactile, etc.).

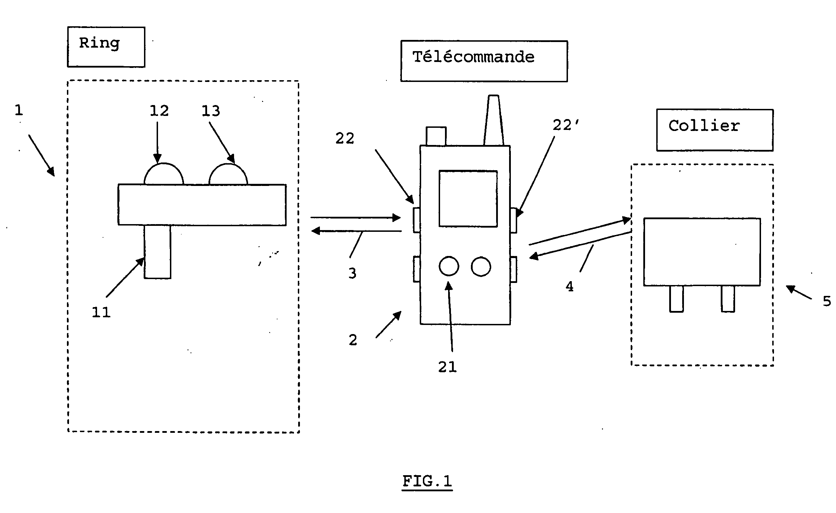

Une modalité d'exécution préférée de la présente invention comporte plus particulièrement un « kit mains libres » de dressage animalier se composant d'un anneau 1 à placer sur un doigt de la main, d'une télécommande 2 et d'un collier de dressage 5 (voir figure 1). La présence de deux interrupteurs 12, 13 est avantageuse en dressage animalier car elle permet de sanctionner soit positivement (par ex. signal sonore), soit négativement (par ex. décharge électrique punitive), le comportement ou la manoeuvre que l'animal vient de réaliser.

L'anneau 1, appelé « Ring » sur la figure 1, est fixé sur le doigt par un dispositif d'attache 11 approprié tel qu'un tissu élastique, une bande Velcro^{®} ou encore par deux pinces ergonomiques de manière à ce que l'anneau 1 puisse s'adapter à différentes tailles de doigt.

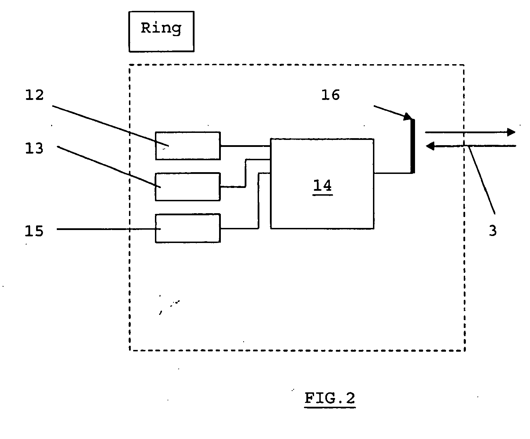

L'anneau 1 comporte un microcontrôleur 14 comprenant un module RF émetteur-récepteur (non représenté) et connecté aux deux switchs précités 12, 13, à une batterie 15 et à une antenne 16 de l'émetteur radio (voir figure 2).

Un code d'identification (ID-CODE) est stocké dans une EEPROM (non représentée) associée au microcontrôleur 14 et est unique pour chaque anneau 1. Pour chaque commande envoyée, l'ID-CODE sera placé en début de trame ce qui permettra de différencier les commandes envoyées par différents anneaux proches les uns des autres.

La télécommande 2 qui sert à traiter l'information venant de l'anneau 1 (communication bidirectionnelle 3 à courte distance, c'est-à-dire quelques mètres) et à envoyer la commande au collier 5 (communication bidirectionnelle 4 à longue distance, c'est-à-dire quelques centaines de mètre, voir plusieurs kilomètres).

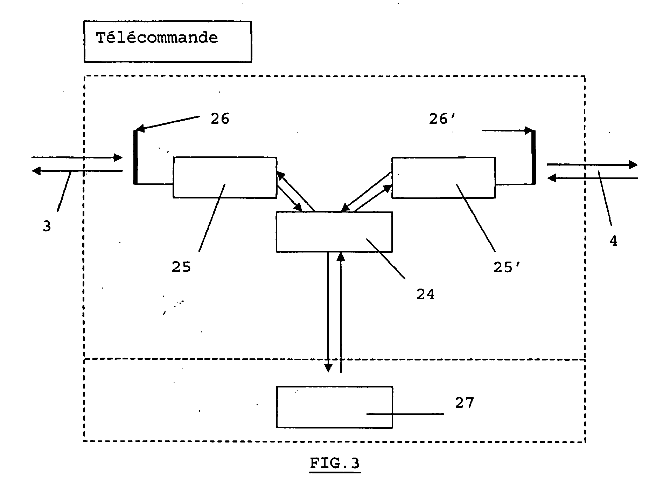

La télécommande 2 comporte un microcontrôleur 24 relié de manière bidirectionnelle d'une part à une interface utilisateur 27 et d'autre part à un module RF émetteur-récepteur 25 associé à une antenne 26 pour la communication bidirectionnelle 3 avec l'anneau 1 et une module RF émetteur-récepteur 25' associé à une antenne 26' pour la communication bidirectionnelle 4 avec le collier 5 (voir figure 3).

De plus, la télécommande 2 peut fonctionner seule, sans l'anneau 1. Ainsi, à cette fin, des paires de switchs 22, 22', etc. figurent également sur le boîtier de la télécommande 2 (voir figure 1).

Enfin, le collier 5, pourvu de dispositifs de dressage traditionnel, reçoit les informations de la télécommande 2. Il comporte un microcontrôleur 54 relié d'une part à un module RF émetteur-récepteur 55 associé à une antenne 56 pour la communication bidirectionnelle 4 avec la télécommande 2 et d'autre part à un système de dressage 57, tel que par exemple un générateur d'impulsions électriques de haute tension.

Les émetteurs-récepteurs utilisés seront de préférence intégrés (électronique et boîtiers communs ; *transceiver* en anglais) et utiliseront de préférence le protocole ZigBee (protocole IEEE 802.15.4).

Si la télécommande utilisée peut commander N colliers (N entier positif), N anneaux peuvent éventuellement être connectés à cette dernière. Alors chaque anneau commandera un et un seul collier, par l'intermédiaire de la télécommande 2. La synchronisation de l'anneau m (1 ≤ m ≤ N) avec le collier m se fera lors d'une séquence de programmation spécifique.

La synchronisation de l'anneau avec un collier peut alors se faire de la manière suivante : un appui long sur le switch « Programmation main libre » 21 de la télécommande fait entrer celle-ci dans un mode spécifique de programmation. On appuie ensuite sur un des deux switchs 22 du chien A par exemple, se trouvant sur la télécommande 2. Enfin, on appuie sur un des deux switchs 12, 13 de l'anneau 1 correspondant. Celui-ci envoie alors son ID-Code (unique) à la télécommande 2. La télécommande 2 associe cet ID-CODE au chien A et stocke l'information en mémoire.

Si l'on a un deuxième anneau à synchroniser, on recommence la procédure, mais en utilisant les switchs 22' du chien B de la télécommande 2 par exemple.

Comme chaque trame de commande contient l'ID-CODE de l'anneau qui émet, la télécommande peut faire suivre la commande venant de l'anneau vers le collier visé. De plus si plusieurs utilisateurs proches l'un de l'autre utilisent le même système, il n'y a pas de risque d'interaction.

Les deux switchs 12, 13 sur l'anneau 1 correspondent en général à deux commandes distinctes pour le même collier 5, préprogrammées par la télécommande 2.

Néanmoins, l'invention ne se limite pas à cette configuration particulière et d'autres configurations connues de l'homme de métier peuvent également être utilisées comme, par exemple, une configuration où les deux switchs 12, 13 de la paire précitée commandent respectivement deux colliers différents A, B.

Le « collier » 5 matérialise le système de dressage entre l'animal à dresser et la télécommande 2. Mais il peut s'agir, selon un mode d'exécution ne faisant pas partie de l'invention, de tout autre système récepteur commandé par ondes radios, tel qu'un récepteur d'engin téléguidé.

## Revendications

1. Système électronique télécommandé, comprenant :
- un dispositif « mains libres » de commande sous forme d'un anneau (1), muni d'un moyen d'attache au doigt (11), d'au moins un interrupteur (12, 13) ainsi que de moyens de télécommunication sans fil (3) avec une télécommande (2) ;
- une télécommande sans fil (2) munie de moyens de télécommunication sans fil (3, 4) d'une part avec ledit anneau (1) apte à être attaché au doigt et d'autre part avec un dispositif récepteur électronique (5) ;
- un dispositif récepteur électronique (5) muni de moyens de télécommunication sans fil (4) avec ladite télécommande (2),
- le dispositif récepteur électronique (5) faisant partie d'un collier de dressage d'animal.

2. Système selon la revendication 1, **caractérisé en ce que** le moyen d'attache au doigt (11) comprend un tissu ou une bande élastique, une bande Velcro^{®} ou un système constitué de deux pinces ergonomiques.

3. Système selon la revendication 1, **caractérisé en ce que** ledit anneau (1) comprend une paire d'interrupteurs (12, 13) correspondant à deux commandes distinctes programmables par la télécommande (2).

4. Système selon la revendication 3, **caractérisé en ce qu'**une paire d'interrupteurs correspondants (22, 22') figure également sur la télécommande (2).

5. Système selon la revendication 1, **caractérisé en ce que** les moyens de télécommunication sans fil (3, 4) sont des moyens de télécommunication par ondes radio, d'une portée d'au moins 10 mètres, de préférence selon la technologie zigBee ou Bluetooth^{®}, infrarouges ou par ultrasons.

6. Système selon la revendication 1, **caractérisé en ce que** la télécommande (2) peut commander plusieurs dispositifs récepteurs (5) et peut être mise en communication avec plusieurs anneaux (1).

7. Système selon la revendication 6, **caractérisé en ce qu'**il comporte des moyens pour synchroniser chaque anneau (1) de manière biunivoque avec son dispositif récepteur correspondant (5).

8. Système selon la revendication 6, **caractérisé en ce qu'**un code d'identification unique est associé à chaque anneau (1) et stocké dans une mémoire de celui-ci.

9. Système selon la revendication 3, **caractérisé en ce que** les commandes associées aux deux interrupteurs (12, 13) de la paire servent à commander deux dispositifs récepteurs (5) différents.

10. Système selon la revendication 1, **caractérisé en ce que** lesdits moyens de télécommunication sans fil (3, 4) sont bidirectionnels.

## Claims

1. A remote controlled electronic system, including:
- a "hands-free" control device in the form of a ring (1), provided with means for fastening to the finger (11), at least one switch (12, 13), as well as wireless telecommunication means (3) with a remote control (2);
- a wireless remote control (2) provided with wireless telecommunication means (3, 4), on the one hand with said ring (1) capable of being fastened to the finger, and on the other hand with an electronic receiving device (5);
- an electronic receiving device (5) provided with wireless telecommunication means (4) with said remote control (2), the electronic receiving device (5) being part of an animal training collar.

2. The system according to claim 1, **characterized in that** the means for fastening to the finger (11) comprise a fabric or an elastic strip, a Velcro® strip, or a system made up of two ergonomic clips.

3. The system according to claim 1, **characterized in that** said ring (1) includes a pair of switches (12, 13) corresponding to two separate commands that can be programmed by the remote control (2).

4. The system according to claim 3, **characterized in that** a pair of corresponding switches (22, 22') is also present on the remote control (2).

5. The system according to claim 1, **characterized in that** the wireless telecommunication means (3, 4) are radio wave telecommunication means, with a range of at least 10 meters, preferably according to the ZigBee or Bluetooth® technology, infrared or ultrasound telecommunication means.

6. The system according to claim 1, **characterized in that** the remote control (2) can control several receiving devices (5) and can be put in communication with several rings (1).

7. The system according to claim 6, **characterized in that** it comprises means for synchronizing each ring (1) with its corresponding receiving device (5) in a one-to-one manner.

8. The system according to claim 6, **characterized in that** a unique identification code is associated with each ring (1) and stored in a memory thereof.

9. The system according to claim 3, **characterized in that** the commands associated with the two switches (12, 13) of the pair are used for controlling two different receiving devices (5).

10. The system according to claim 1, **characterized in that** said wireless telecommunication means (3, 4) are bidirectional.

## Patentansprüche

1. Ferngesteuertes elektronisches System, das umfasst:
- eine Freihand-Steuervorrichtung in Form eines Rings (1), die mit einem Fingerbefestigungsmittel (11), mindestens einem Schalter (12, 13) sowie drahtlosen Fernmeldemitteln (3) mit einer Fernsteuerung (2) ausgestattet ist,
- eine drahtlose Fernsteuerung (2), die einerseits mit drahtlosen Fernmeldemitteln (3, 4) mit dem Ring (1) mit Fingerbefestigungsmitteln und andererseits mit einer elektronischem Empfangsvorrichtung (5) ausgestattet ist,
- eine elektronische Empfangsvorrichtung (5), die mit drahtlosen Fernmeldemitteln (4) mit der Fernbedienung (2) ausgestattet ist, wobei die elektronische Empfangsvorrichtung (5) Bestandteil eines Tierdressurhalsbands ist.

2. System nach Anspruch 1, **dadurch gekennzeichnet, dass** die Fingerbefestigungsvorrichtung (11) ein Gewebe oder einen elastischen Streifen, einen velcro®-Klettstreifen oder ein System umfasst, das aus zwei ergonomischen Zangen besteht.

3. System nach Anspruch 1, **dadurch gekennzeichnet, dass** der Ring (1) ein Paar Schalter (12, 13) umfasst, die zwei verschiedenen, durch die Fernsteuerung (2) programmierbaren Befehlen entsprechen.

4. System nach Anspruch 3, **dadurch gekennzeichnet, dass** ein entsprechendes Paar Schalter (22, 22') ebenfalls auf der Fernsteuerung (2) vorhanden ist.

5. System nach Anspruch 1, **dadurch gekennzeichnet, dass** die drahtlosen Fernsteuerungsmittel (3, 4) Funkwellen-Fernsteuerungsmittel vorzugsweise gemäß der ZigBee- oder Bluetooth®-, Infrarot- oder Ultraschalltechnologie mit einer Reichweite von mindestens 10 Metern sind.

6. System nach Anspruch 1, **dadurch gekennzeichnet, dass** die Fernsteuerung (2) mehrere Empfangsvorrichtungen (5) steuern kann und mit mehreren Ringen (1) in Kommunikation versetzt werden kann.

7. System nach Anspruch 6, **dadurch gekennzeichnet, dass** es Mittel aufweist, um jeden Ring (1) eineindeutig mit seiner entsprechenden Empfangsvorrichtung (5) zu synchronisieren.

8. System nach Anspruch 6, **dadurch gekennzeichnet, dass** jedem Ring (1) ein einziger Identifikationscode zugeordnet und im Speicher desselben gespeichert ist.

9. System nach Anspruch 3, **dadurch gekennzeichnet, dass** die den zwei Schaltern (12, 13) des Paars zugeordneten Steuerungen zur Steuerung von zwei unterschiedlichen Empfangsvorrichtungen (5) dienen.

10. System nach Anspruch 1, **dadurch gekennzeichnet, dass** die drahtlosen Fernmeldemittel (3, 4) bidirektional sind.
